(19) Europäisches Patentamt
European Patent Office
Office européen des brevets

(11) EP 3 643 497 A1

(12) # EUROPEAN PATENT APPLICATION
published in accordance with Art. 153(4) EPC

(43) Date of publication:
**29.04.2020 Bulletin 2020/18**

(21) Application number: **18820818.5**

(22) Date of filing: **21.05.2018**

(51) Int Cl.:
***B32B 15/08*** *(2006.01)* ***B32B 27/00*** *(2006.01)*

(86) International application number:
**PCT/JP2018/019486**

(87) International publication number:
**WO 2018/235488 (27.12.2018 Gazette 2018/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2017 JP 2017121242**

(71) Applicant: **Fujifilm Corporation**
**Minato-ku**
**Tokyo 106-8620 (JP)**

(72) Inventor: **KAWAGUCHI Junji**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(54) **COMPOSITE BODY**

(57) An object is to provide a composite body with which a molded article having both excellent metallic luster and light-transmitting properties can be produced.

A composite body including: a metal foil having a plurality of through-holes in the thickness direction; and a colored layer provided on at least one surface side of the metal foil, in which an average opening diameter of the through-holes is 0.1 to 100 μm, an average opening ratio provided by the through-holes is 0.1% to 90%, and a light transmittance of the colored layer is 5% or higher.

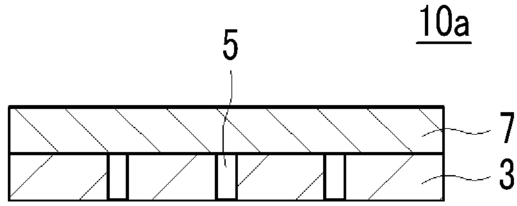


FIG. 3

EP 3 643 497 A1

## Description

## BACKGROUND OF THE INVENTION

1. Field of the Invention

The present invention relates to a composite body.

2. Description of the Related Art

It has been conventionally known that the decorativeness of a resin molded article is enhanced by vapor-depositing metal on the surface of the resin molded article and thereby imparting a metallic tone or a half-mirror tone to the resin molded article.

For example, in JP2005-015867A, "a decorated plastic molded article which is a light-transmitting plastic molded article (1) having a vapor-deposited film (3) containing a metal as a main ingredient formed on the surface, in which the total light transmittance is in the range of 98% to 50% of the total light transmittance obtainable before the formation of the vapor-deposited film (3)" is described ([claim 1]).

Furthermore, in JP2015-196280A, "a decorated resin molded article that is vapor-deposited, having a vapor-deposited film layer formed on the outer surface of a transparent resin base material; and a transparent top coat layer formed on the surface of the vapor-deposited film layer, in which the color tone viewed from the outer surface side and the color tone viewed from the inner surface side are close to each other" is described ([claim 1]).

## SUMMARY OF THE INVENTION

The inventors of the invention conducted a study on the conventionally known decorated plastic molded articles described in JP2005-015867A, JP2015-196280A, and the like, and they found that it is difficult to obtain both the metallic luster and light-transmitting properties.

Thus, it is an object of the invention to provide a composite body with which a molded article having both excellent metallic luster and excellent light-transmitting properties can be produced.

The inventors conducted a thorough investigation in order to achieve the object described above, and as a result, the inventors found that a composite body having both excellent metallic luster and excellent light-transmitting properties is obtained, by including a metal foil having through-holes, the through-holes having an average opening diameter and an average opening ratio in particular ranges, and a colored layer having light-transmitting properties. Thus, the inventors completed the invention.

That is, the inventors found that the object described above can be achieved by the following configurations.

[1] A composite body including:

a metal foil having a plurality of through-holes in a thickness direction; and
a colored layer provided on at least one surface side of the metal foil,
in which an average opening diameter of the through-holes is 0.1 to 100 $\mu$m,
an average opening ratio provided by the through-holes is 0.1% to 90%, and
a light transmittance of the colored layer is 5% or higher.

[2] The composite body according to [1], further including:

a resin layer provided on at least one surface of the metal foil,
in which the colored layer is provided on a surface of at least one of the metal foil or the resin layer.

[3] The The composite body according to [1] or [2], in which the colored layer includes at least one of a dye or a pigment.

[4] The composite body according to any one of [1] to [3], in which the composite body has a light transmittance of 0.1% to 90%.

[5] The composite body according to any one of [1] to [4], in which a thickness of the metal foil is 5 $\mu$m to 1000 $\mu$m.

[6] The composite body according to any one of [1] to [5], in which the metal foil is a foil selected from the group consisting of an aluminum foil, a copper foil, a silver foil, a gold foil, a platinum foil, a stainless steel foil, a titanium foil, a tantalum foil, a molybdenum foil, a niobium foil, a zirconium foil, and a tungsten foil, a beryllium copper foil, a phosphor bronze foil, a brass foil, a white foil, a tin foil, a lead foil, a zinc foil, a solder foil, an iron foil, a nickel foil, a permalloy foil, a nichrome foil, a 42 alloy foil, a Kovar foil, a Monel foil, an Inconel foil, and a Hastelloy foil, or a

foil in which the foil selected from this group and a metal of a different kind from the selected foil are laminated on each other.

[7] The composite body according to any one of [1] to [6], in which the composite body is used in a decorative film.

As will be explained below, according to the invention, a composite body having both excellent metallic luster and excellent light-transmitting properties can be provided.

**BRIEF DESCRIPTION OF THE DRAWINGS**

Fig. 1 is a schematic top view illustrating an example of the composite body of the invention.

Fig. 2 is a cross-sectional view cut along the line B-B of Fig. 1.

Fig. 3 is a schematic cross-sectional view illustrating another example of the composite body of the invention.

Fig. 4 is a schematic cross-sectional view illustrating still another example of the composite body of the invention.

Fig. 5 is a schematic cross-sectional view illustrating still another example of the composite body of the invention.

Fig. 6 is a schematic cross-sectional view illustrating still another example of the composite body of the invention.

Fig. 7 is a schematic cross-sectional view illustrating still another example of the composite body of the invention.

Fig. 8 is a schematic cross-sectional view illustrating still another example of the composite body of the invention.

Fig. 9 is a cross-sectional view of a metal foil for explaining the average effective diameter of the through-holes.

Fig. 10 is a cross-sectional view of another metal foil for explaining the average effective diameter of the through-holes.

Fig. 11 is a schematic cross-sectional view of an aluminum foil among schematic cross-sectional views for explaining an example of a suitable production method for the composite body of the invention.

Fig. 12 is a schematic cross-sectional view illustrating the state in which an aluminum hydroxide coating film has been formed on the surface of the aluminum foil by subjecting the aluminum foil to a coating film forming treatment, among the schematic cross-sectional views for explaining the example of the suitable production method for the composite body of the invention.

Fig. 13 is a schematic cross-sectional view illustrating the state in which through-holes have been formed in the aluminum foil and the aluminum hydroxide coating film by subjecting the aluminum foil and the aluminum hydroxide coating film to an electrochemical dissolution treatment after the coating film forming treatment, among the schematic cross-sectional views for explaining the example of the suitable production method for the composite body of the invention.

Fig. 14 is a schematic cross-sectional view illustrating the state in which the aluminum hydroxide coating film has been removed after the electrochemical dissolution treatment, among the schematic cross-sectional views for explaining the example of the suitable production method for the composite body of the invention.

Fig. 15 is a schematic cross-sectional view illustrating the state in which a colored layer has been formed on one of the surfaces after the removal of the aluminum hydroxide coating film, among the schematic cross-sectional views for explaining the example of the suitable production method for the composite body of the invention.

Fig. 16 is a schematic cross-sectional view of the aluminum foil among schematic cross-sectional views for explaining another example of a suitable production method for the composite body of the invention.

Fig. 17 is a schematic cross-sectional view illustrating the state in which an aluminum hydroxide coating film has been formed on the front surface and the back surface of the aluminum foil by subjecting the aluminum foil to a coating film forming treatment, among the schematic cross-sectional views for explaining the other example of the suitable production method for the composite body of the invention.

Fig. 18 is a schematic cross-sectional view illustrating the state in which through-holes have been formed in the aluminum foil and the aluminum hydroxide coating film by subjecting the aluminum foil and the aluminum hydroxide coating film to an electrochemical dissolution treatment after the coating film forming treatment, among the schematic cross-sectional views for explaining the other example of the suitable production method for the composite body of the invention.

Fig. 19 is a schematic cross-sectional view illustrating the state in which the aluminum hydroxide coating film has been removed after the electrochemical dissolution treatment, among the schematic cross-sectional views for explaining the other example of the suitable production method for the composite body of the invention.

Fig. 20 is a schematic cross-sectional view illustrating the state in which a colored layer has been formed on one surface and a resin layer has been formed on the other surface after the removal of the aluminum hydroxide coating film, among the schematic cross-sectional views for explaining the other example of the suitable production method for the composite body of the invention.

Fig. 21 is a schematic cross-sectional view of an aluminum foil among schematic cross-sectional views for explaining another example of a suitable production method for the composite body of the invention.

Fig. 22 is a schematic cross-sectional view illustrating the state in which a resin layer has been formed on one of the surfaces of the aluminum foil, among the schematic cross-sectional views for explaining the other example of the suitable production method for the composite body of the invention.

Fig. 23 is a schematic cross-sectional view illustrating the state in which an aluminum hydroxide coating film has been formed on the surface of the aluminum foil on the side where a resin layer is not formed, by subjecting the relevant surface of the aluminum foil to a coating film forming treatment, among the schematic cross-sectional views for explaining the other example of the suitable production method for the composite body of the invention.

Fig. 24 is a schematic cross-sectional view illustrating the state in which through-holes have been formed in the aluminum foil and the aluminum hydroxide coating film by subjecting the aluminum foil and the aluminum hydroxide coating film to an electrochemical dissolution treatment after the coating film forming treatment, among the schematic cross-sectional views for explaining the other example of the suitable production method for the composite body of the invention.

Fig. 25 is a schematic cross-sectional view illustrating the state in which the aluminum hydroxide coating film is removed after the electrochemical dissolution treatment, among the schematic cross-sectional views for explaining the other example of the suitable production method for the composite body of the invention.

Fig. 26 is a schematic cross-sectional view illustrating the state in which a colored layer has been formed on the surface of the aluminum foil on a side where the resin layer has not been formed after the removal of the aluminum hydroxide coating film, among the schematic cross-sectional views for explaining the other example of the suitable production method for the composite body of the invention.

Fig. 27 is a schematic cross-sectional view illustrating the state in which a first protective layer, in which a part of metal particle has been embedded, has been formed on one surface of the metal foil by a first protective layer forming step, among the schematic cross-sectional views for explaining the other example of the suitable production method for the composite body of the invention.

Fig. 28 is a schematic cross-sectional view illustrating the state in which a second protective layer has been formed on one surface of the metal foil on a side where the first protective layer has not been formed, by any second protective layer forming step, among the schematic cross-sectional views for explaining the other example of the suitable production method for the composite body of the invention.

Fig. 29 is a schematic cross-sectional view illustrating the state in which through-holes have been formed in the first protective layer and the metal foil by a through-hole forming step, among the schematic cross-sectional views for explaining the other example of the suitable production method for the composite body of the invention.

Fig. 30 is a schematic cross-sectional view illustrating the state in which a perforated metal foil from which the protective layer has been removed by a protective layer removing step, among the schematic cross-sectional views for explaining the other example of the suitable production method for the composite body of the invention.

Fig. 31 is a schematic cross-sectional view illustrating the state in which a colored layer has been formed on one surface of a metal foil after removing the protective layer, among the schematic cross-sectional views for explaining the other example of the suitable production method for the composite body of the invention.

## DESCRIPTION OF THE PREFERRED EMBODIMENTS

Hereinafter, the invention will be described in detail.

The explanation of the constituent elements described below may be based on representative embodiments of the invention; however, the invention is not intended to be limited to such embodiments.

In the present specification, a numerical value range indicated using the term "to" means a range including the numerical values described before and after the term "to" as the lower limit and the upper limit.

[Composite body]

The composite body of the invention includes
a metal foil having a plurality of through-holes in the thickness direction; and
a colored layer provided on at least one surface side of the metal foil,
in which an average opening diameter of the through-holes is 0.1 to 100 μm,
an average opening ratio provided by the through-holes is 0.1% to 90%, and
a light transmittance of the colored layer is 5% or higher.

Here, regarding the average opening diameter of the through-holes, from a scanning electron microscope (SEM) photograph obtained by capturing an image of the surface of the metal foil from right above at a magnification ratio of 100 to 10,000 times using a high resolution SEM, at least twenty through-holes each having its circumference arranged annularly are extracted, the diameters of the through-holes are read out as opening diameters, and the average value of these values is calculated as the average opening diameter.

Regarding the magnification ratio, a magnification ratio in the range described above can be selected as appropriate so as to obtain an SEM photograph from which twenty or more through-holes can be extracted. The opening diameter was obtained by measuring the maximum value of the distance between ends of a through-hole area. That is, since the shape of the opening of a through-hole is not limited to an approximately circular shape, in a case where the shape of the opening is a non-circular shape, the maximum value of the distance between ends of a through-hole area is designated as the opening diameter. Therefore, for example, even in the case of a through-hole having a shape that seems as if two or more through-holes have integrated, this is regarded as a single through-hole, and the maximum value of the distance between ends of the through-hole area is designated as the opening diameter.

Regarding the average opening ratio provided by the through-holes, a parallel light optical unit is installed on the side of one of the surfaces of the metal foil, parallel light is transmitted, an image of the surface of the metal foil is captured from the other surface of the metal foil at a magnification ratio of 100 times using an optical microscope, and a photograph is obtained. In a viewing field having a size of 100 mm × 75 mm (five sites) in a range of 10 cm × 10 cm of the photograph thus obtained, the ratio (opening area / geometrical area) is calculated from the sum of the opening areas of the through-holes projected by the transmitted parallel light and the area of the viewing field (geometrical area), and the average value of the various viewing fields (five sites) is calculated as the average opening ratio.

According to the invention, it is possible to obtain a composite body having both excellent metallic luster and excellent light-transmitting properties, by including a metal foil having through-holes, the through-holes having an average opening diameter and an average opening ratio in particular ranges, and a colored layer provided on at least one surface of the metal foil.

That is, since the average opening diameter and the average opening ratio of the through-holes existing in the metal foil are within the ranges described above, it becomes difficult to visually recognize the existence of the through-holes, and since visible light can permeate through the through-holes, the light can permeate without impairing the external appearance.

In addition, by having a colored layer, metallic luster showing desired tint can be obtained.

Next, the overall configuration of the composite body of the invention will be explained using Fig. 1 to Fig. 8, and then various specific configurations will be explained.

A composite body 10a illustrated in Fig. 1 and Fig. 2 includes a metal foil 3 having a plurality of through-holes 5 in the thickness direction, and a colored layer 7 provided on one of the surfaces of the metal foil 3.

Here, in the composite body 10a illustrated in Fig. 2, the hole wall surface of the through-holes 5 is perpendicular to the surface of the metal foil 3; however, according to the invention, the hole wall surface of the through-holes may have a concavo-convex shape as illustrated in Fig. 9 and Fig. 10 shown below.

Furthermore, in the composite body 10a illustrated in Fig. 2, the colored layer 7 is provided on one of the surfaces of the metal foil 3; however, the colored layer 7 may be provided on both surfaces of the metal foil 3 as a composite body 10b illustrated in Fig. 3 shown below.

In the composite body 10a illustrated in Fig. 2, the colored layer 7 is not filled in the through-holes 5 and only provided on the surface of the metal foil 3, the colored layer 7 may be filled in a part of the through-holes 5, or may be provided to be embedded in the through-holes 5, as a composite body 10c illustrated in Fig. 4.

The composite body of the invention may include a resin layer provided on at least one surface of the metal foil. It is possible to improve supporting properties of the metal foil by including the resin layer. In addition, it is possible to improve scratch resistance by protecting the surface of the metal foil. Further, it is possible to improve molding properties.

A composite body 10d illustrated in Fig. 5 includes a resin layer 6 on one surface of the metal foil 3, and the colored layer 7 is provided on a surface of the metal foil 3 on a side where the resin layer 6 is not formed.

In the composite body 10d illustrated in Fig. 5, the colored layer 7 is provided on a surface of the metal foil 3, and the colored layer 7 may be provided on the surface of the resin layer 6, as a composite body 10e illustrated in Fig. 6.

In addition, as a composite body 10f illustrated in Fig. 7, the colored layer 7 may be respectively provided on the surface of the metal foil 3 and the surface of the resin layer 6.

In a composite body 10d illustrated in Fig. 5, the resin layer 6 is provided on one surface of the metal foil 3, and the resin layer 6 may be provided on both surfaces of the metal foil 3. In this case, the colored layer 7 may be provided on at least one surface of the resin layer 6.

In the composite body 10d illustrated in Fig. 5, the colored layer 7 is configured to be provided entirely on the surface of the metal foil 3 as a film-shaped flat member, there is no limitation thereto, and the colored layer 7 may be provided on at least a part of the surface of the metal foil 3 (or resin layer 6). For example, as a composite body 10g illustrated in Fig. 8, a colored layer 7b may be configured to be provided as a plurality of dots.

[Metal Foil]

The metal foil having the composite body of the invention is not particularly limited, as long as it includes through-holes which will be described later. A foil configured of a metal and/or a metal compound capable of easily forming the through-holes having the average opening diameter and the average opening ratio described above is preferable, and the foil configured of metal is more preferable. In addition, a metal foil including a metal atom dissolved in an etchant used in a through-hole forming step B which will be described later is also preferable.

Specific examples of the metal foil include an aluminum foil, a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a white foil, a tin foil, a lead foil, a zinc foil, a solder foil, an iron foil, a nickel foil, a permalloy foil, a nichrome foil, a 42 alloy foil, a Kovar foil, a Monel foil, an Inconel foil, and a Hastelloy foil.

The metal foil may be a foil in which two or more different kinds of metal including the kinds of metal described above are laminated.

A laminating method of the metal foil is not particularly limited, and a method using plating or a clad material is preferable. The metal used in the plating is preferably a metal including a metal atom dissolving in an etchant. Examples of plating species include nickel, chromium, cobalt, iron, zinc, tin, copper, silver, gold, platinum, palladium, and aluminum.

A method of plating is not particularly limited, and any of electroless plating, electrolytic plating, hot dipping, and a chemical conversion treatment.

The metal used for forming a clad material with respect to the metal foil is preferably a metal including a metal atom dissolving in an etchant. As the metal species, for example, the metal used for the metal foil is used.

An average thickness of the metal foil is preferably 5 μm to 1000 μm. The average thickness of the metal foil is more preferably 5 μm to 50 μm and even more preferably 8 μm to 30 μm, from a viewpoint of handleability.

Here, the average thickness of the metal foil is a value obtained by averaging thicknesses measured at 5 random points using a contact type film thickness meter (digital electron micrometer).

<Through-holes>

The through-holes carried by the metal foil are such that, as described above, the average opening diameter of the through-holes is 0.1 to 100 μm, and the average opening ratio provided by the through-holes is 0.1% to 90%.

Here, from the viewpoints of light-transmitting properties, visibility of the through-holes, tensile strength, adhesiveness to the colored layer, adhesiveness to the resin layer, and the like, the average opening diameter of the through-holes is preferably 1 to 45 μm, more preferably 1 to 40 μm, and even more preferably 1 to 30 μm.

Furthermore, from the viewpoints of light-transmitting properties, visibility of the through-holes, tensile strength, adhesiveness to the colored layer, adhesiveness to the resin layer, and the like, the average opening ratio provided by the through-holes is preferably 2% to 45%, more preferably 2% to 30%, and even more preferably 2% to 20%.

According to the invention, for the reason that the light-transmitting properties are further improved, the average effective diameter of the through-holes in a cross section cut in a direction perpendicular to the surface of the metal foil is preferably 700 nm or more, more preferably 800 nm or more, and even more preferably 1 to 100 μm.

Here, the average effective diameter refers to the shortest distance between hole wall surfaces of a through-hole in a cross section cut in a direction perpendicular to the surface of the metal foil, and as illustrated in Fig. 9 and Fig. 10, the average effective diameter refers to the average value of distances X, each distance being the distance between a perpendicular line a at a point 3a where the distance from the reference line A to the left-hand side hale wall surface of a through-hole is the largest, and a perpendicular line b at a point 3b where the distance from the reference line B to the right-hand side hole wall surface of the through-hole is the largest.

According to the invention, regarding the average effective diameter, a parallel light optical unit is installed on the side of one of the surfaces of the metal foil, parallel light is transmitted, an image of the surface of the metal foil is captured from the other surface of the metal foil at a magnification ratio of 100 times using an optical microscope, and thus a photograph is obtained. In a viewing field having a size of 100 mm × 75 mm (five sites) in a range of 10 cm × 10 cm of the photograph thus obtained, twenty through-holes that are projected by the transmitted parallel light are extracted from each viewing field. The diameters of one hundred through-holes in total thus extracted are measured, and the average value of these is calculated as the average effective diameter.

<Aluminum Foil>

The aluminum in a case of using the aluminum foil as the metal foil is not particularly limited, and for example, known aluminum alloys such as 3000 series (for example, 3003 material) and 8000 series (for example, 8021 material) can be used.

Regarding such aluminum alloys, for example, aluminum alloys of the alloy numbers indicated in the following Table 1 can be used.

[Table 1]

| Alloy No. | Si (% by mass) | Fe (% by mass) | Cu (% by mass) |
|---|---|---|---|
| 1085 | 0.02 | 0.04 | <0.01 |
| 1N30 | 0.11 | 0.45 | 0.02 |
| 8021 | 0.04 | 1.44 | <0.01 |
| 3003 | 0.60 | 0.70 | 0.10 |

[Colored Layer]

The colored layer included in the composite body of the invention may apply a desired tint and have light-transmitting properties.

Here, the expression "the colored layer has light-transmitting properties" means that transmittance of visible light is 5% or higher.

Such a colored layer, for example, includes a coloring material and a resin which will be described later. In the invention, the colored layer can be formed with a normal ink.

As the ink, various well-known inks such as a water-based ink, a solvent-based ink, a water-based latex-added ink, and an ultraviolet (UV) curable ink. From viewpoints of adhesiveness to the metal foil and/or the resin layer and formation of a high-quality image, the water-based latex-added ink and the UV curable ink are preferable, and the UV curable ink is more preferable.

<Coloring Material>

The coloring material included in the colored layer is not particularly limited and can be selected from coloring materials having desired colors. The coloring material may be a pigment or a dye.

As the pigment, various well-known inorganic pigments and organic pigment in the related art can be used.

As the inorganic pigment, a white pigment disclosed in paragraphs 0015 and 0114 of JP2005-007765A is used, for example.

Specific examples of the inorganic pigment include a white pigment such as titanium dioxide, zinc oxide, lithopone, light calcium carbonate, white carbon, aluminum oxide, aluminum hydroxide, or barium sulfate, and a black pigment such as carbon black, titanium black, titanium carbon, iron oxide, titanium oxide, and graphite.

As the inorganic pigment, for example, an organic pigment disclosed in a paragraph 0093 of JP2009-256572A is used.

Specific examples of the organic pigment include a red pigment such as C.I. Pigment Red 177, 224, 242, 254, 255, or 264, a yellow pigment such as C.I. Pigment Yellow 138, 139, 150, 180, or 185, an orange pigment such as C.I. Pigment Orange 36, 38, or 71, a green pigment such as C.I. Pigment Green 7, 36, or 58, a blue pigment such as C.I. Pigment Blue 15:6, and a violet pigment such as C.I. Pigment Violet 23.

These inorganic pigments and organic pigments may be used alone or in combination of two or more kinds thereof. In addition, the inorganic pigment and the organic pigment may be used in combination.

A content of the coloring material in the colored layer is preferably 1% by mass to 60% by mass, more preferably 5% by mass to 55% by mass, and even more preferably 10% by mass to 50% by mass with respect to a total mass of the colored layer.

<Resin>

A resin included in the colored layer functions as a binder which fixes the coloring material.

The resin is not particularly limited and a well-known resin can be suitably selected.

Examples of the resin include an acrylic resin, a silicone resin, an ester resin, a urethane resin, or an olefin resin.

In addition, the resin may be a polymer compound obtained by polymerizing (curing) a polymerizable compound (monomer) which will be described later. In a case of using a resin obtained by curing the polymerizable compound, strength of the colored layer is improved.

Among these, from a viewpoint of transparency, an acrylic resin, a silicone resin, and an ester resin are preferable, and an acrylic resin and a silicone resin are more preferable.

In the specification, the "acrylic resin" indicates a resin having a constitutional unit derived from an acrylic monomer including a (meth)acryloyl group. The (meth)acryloyl group includes a methacryloyl group and an acryloyl group.
The acrylic resin, for example, includes a homopolymer of acrylic acid, a homopolymer of methacrylic acid, a homopolymer of acrylic ester, a homopolymer of methacrylic ester, a copolymer of acrylic acid and another monomer, a copolymer of methacrylic acid and another monomer, a copolymer of acrylic ester and another monomer, a copolymer of methacrylic ester and another monomer, and the like.
Examples of the acrylic resin include a glycidyl methacrylate adduct of cyclohexyl methacrylate/methyl methacrylate/methacrylic acid copolymer, a random copolymer of benzyl methacrylate/methacrylic acid, a copolymer of allyl methacrylate/methacrylic acid, and a copolymer of benzyl methacrylate/methacrylic acid/hydroxyethyl methacrylate.
The silicone resin can be selected from well-known silicone resins, and examples thereof include a methyl straight silicone resin, a methylphenyl straight silicone resin, an acrylic resin-modified silicone resin, an ester resin-modified silicone resin, an epoxy resin-modified silicone resin, an alkyd resin-modified silicone resin, and a rubber silicone resin.
Among these, a methyl straight silicone resin, a methylphenyl straight silicone resin, an acrylic resin-modified silicone resin, and a rubber silicone resin are preferable, and a methyl straight silicone resin, a methylphenyl straight silicone resin, and a rubber silicone resin are more preferable.
A content of the resin in the colored layer is preferably 20% by mass to 90% by mass, more preferably 30% by mass to 85% by mass, and even more preferably 35% by mass to 80% by mass with respect to a total mass of the colored layer.
The colored layer may be a layer formed as a layer of a single color with one kind of ink, or may be a layer formed in a desired pattern with two or more kinds of ink.
As a forming method of the colored layer, a printing method using a plate such as offset printing, gravure printing, letterpress printing, and screen printing, and a digital printing method using an inkjet can be used. Particularly, the inkjet is preferable, because the printing can be performed in a non-contact manner with the metal foil and/or the resin layer and thus, the colored layer can be formed without damaging the metal foil and/or the resin layer.
Alternatively, a film-shaped material having a desired tint may be laminated to form a colored layer.
The colored layer has light-transmitting properties. Specifically, a transmittance of visible light of the colored layer is 5% or higher, preferably 25% or higher, and more preferably 50% or higher.
In the specification, visible light indicates light (electromagnetic wave) in a wavelength range of 380 to 780 nm, and the transmittance is a total light transmittance and may be measured based on JIS K 7361 using a commercially available measurement apparatus such as NDH 4000 or SH-7000 manufactured by Nippon Denshoku Industries Co., Ltd.
An average thickness of the colored layer may be suitably set in accordance with the kind of ink, and coloring properties and light-transmitting properties obtained.

[Resin layer]

The resin layer which may be included in the composite body of the invention is not particularly limited as long as the resin layer is a layer formed from a resin material having transparency, and examples of the resin material include a polyester and a polyolefin.
Specific examples of the polyester include polyethylene terephthalate (PET) and polyethylene naphthalate.
Specific examples of other resin materials include a polyamide, a polyether, a polystyrene, a polyester amide, a polycarbonate, polyphenylene sulfide, a polyether ester, polyvinyl chloride, a polyacrylic acid ester, and a polymethacrylic acid ester.
Here, the phrase "the resin layer having transparency" represents that the transmittance of visible light is 60% or higher, preferably 80% or higher, and particularly preferably 90% or higher.

<Thickness>

From the viewpoints of handleability and workability, the average thickness of the resin layer is preferably 12 to 200 μm, more preferably 12 to 100 μm, even more preferably 25 to 100 μm, and particularly preferably 50 to 100 μm.
Here, the average thickness of the resin layer refers to the average value of thicknesses measured at any five points using a contact type film thickness meter (digital electronic micrometer).

[Method for producing composite body]

The method for producing the composite body of the invention is not particularly limited; however, in a case of using an aluminum foil as the metal foil, for example, a method including a coating film forming step of forming an aluminum hydroxide coating film on at least one surface of an aluminum foil; a through-hole forming step A of performing

a through-hole forming treatment after the coating film forming step and thereby forming through-holes; a coating film removing step of removing the aluminum hydroxide coating film after the through-hole forming step A; and a colored layer forming step of forming a colored layer on at least one surface side of the aluminum foil having through-holes after the coating film removing step (hereinafter, also referred to as a "production method A") is used.

As the production method in a case of using the metal other than aluminum as a material of the metal foil, for example, a production method including a first protective layer forming step of forming a first protective layer including particles on at least one surface of a metal foil; a through-hole forming step B of forming through-holes in the metal foil; a protective layer removing step of removing the first protective layer after the through-hole forming step B; and a colored layer forming step of forming a colored layer on at least one surface side of the metal foil including the through-holes (hereinafter, also referred to as a "production method B") is used. The production method B can also be applied, in a case of using aluminum as a material of the metal foil.

Hereinafter, various steps of the production method A for the composite body, in a case of using an aluminum foil as the metal foil, will be explained using Fig. 11 to Fig. 15, Fig. 16 to Fig. 20, and Fig. 21 to Fig. 26, and then the various steps will be described in detail.

Fig. 11 to Fig. 15 and Fig. 16 to Fig. 20 are schematic cross-sectional views illustrating examples of suitable embodiments of production method A for the composite body (hereinafter, also referred to as a "production method A-1").

As illustrated in Fig. 11 to Fig. 15 and Fig. 16 to Fig. 20, production method A-1 for the composite body is a production method including a coating film forming step (Fig. 11 and Fig. 12, and Fig. 16 and Fig. 17) of subjecting one of the surfaces (both surfaces in the aspect illustrated in Fig. 16) of a metal foil (aluminum foil) 1 to a coating film forming treatment, and thereby forming an aluminum hydroxide coating film 2; a through-hole forming step A (Fig. 12 and Fig. 13, and Fig. 17 and Fig. 18) of subjecting the metal foil to an electrolytic dissolution treatment after the coating film forming step so as to form through-holes 5, and producing a laminate having a metal foil 3 having through-holes (aluminum foil having through-holes) and an aluminum hydroxide coating film 4 having through-holes; a coating film removing step (Fig. 13 and Fig. 14, and Fig. 17 and Fig. 18) of removing the aluminum hydroxide coating film 4 having through-holes after the through-hole forming step A, and producing an aluminum foil 3 having through-holes; and a colored layer forming step (Fig. 14 and Fig. 15, and Fig. 19 and Fig. 20) of forming a colored layer 7 on one of the surfaces of the aluminum foil 3 having through-holes after the coating film removing step.

As a preferable aspect, the production method illustrated in Fig. 16 to Fig. 20 includes a resin layer forming step of forming a resin layer 6 on the surface of the aluminum foil 3 having through-holes. The resin layer forming step may be performed before or after the colored layer forming step.

The colored layer forming step is not limited to a step of forming the colored layer 7 on the surface of the aluminum foil 3 having through-holes and may be a step of forming the colored layer 7 on the surface of the resin layer 6 after the resin layer forming step.

In addition, the colored layer forming step may be a step of forming the colored layer 7 on both surface sides of the aluminum foil 3 having through-holes.

The resin layer forming step may be a step of forming the resin layer 6 on both surfaces of the aluminum foil 3 having through-holes.

Fig. 21 to Fig. 26 are schematic cross-sectional views illustrating another example (hereinafter, referred to as a production method A-2) of a suitable embodiment of production method A for the composite body.

The production method A-2 for the composite body illustrated in Fig. 21 to Fig. 26 is a production method including a resin layer forming step (Fig. 21 and Fig. 22) of forming a resin layer 6 on one of the surfaces of a metal foil (aluminum foil 1); a coating film forming step (Fig. 22 and Fig. 23) of subjecting the surface of the aluminum foil 1 on the side where the resin layer 6 is not formed, to a coating film forming treatment, and forming an aluminum hydroxide coating film 2; a through-hole forming step A (Fig. 23 and Fig. 24) of subjecting the metal foil to an electrolytic dissolution treatment after the coating film forming step so as to form through-holes 5, and producing a laminate including an aluminum foil 3 having through-holes, an aluminum hydroxide coating film 4 having through-holes, and a resin layer 6 that does not have through-holes; a coating film removing step (Fig. 24 and Fig. 25) of removing the aluminum hydroxide coating film 4 having through-holes after the through-hole forming step A, and producing a laminate including the aluminum foil 3 having through-holes and the resin layer 6 that does not have through-holes; and a colored layer forming step (Fig. 25 and Fig. 26) of forming a colored layer 7 on one surface side of the aluminum foil 3 having through-holes after the coating film removing step.

As described above, in a case of producing the composite body including the resin layer 6, the resin layer forming step may be performed before the coating film forming step and the through-hole forming step A.

[Coating film forming step]

The coating film forming step is a step of subjecting the surface of an aluminum foil to a coating film forming treatment and forming an aluminum hydroxide coating film.

<Coating film forming treatment>

The coating film forming treatment is not particularly limited, and for example, a treatment such as any conventionally known treatment for forming an aluminum hydroxide coating film can be applied.
Regarding the coating film forming treatment, for example, the conditions or apparatuses described in paragraphs [0013] to [0026] of JP2011-201123A can be employed as appropriate.
According to the invention, since the conditions for the coating film forming treatment undergo various changes depending on the liquid electrolyte used, the conditions cannot be determined indiscriminately; however, in general, conditions include a liquid electrolyte concentration of 1% to 80% by mass, a liquid temperature of 5°C to 70°C, a current density of 0.5 to 60 $A/dm^2$, a voltage of 1 to 100 V, and an electrolysis time of 1 second to 20 minutes are appropriate, and the coating film amount is adjusted to obtain a desired coating film amount.
According to the invention, it is preferable that an electrochemical treatment is carried out using nitric acid, hydrochloric acid, sulfuric acid, phosphoric acid, oxalic acid, or a mixed acid of two or more of these acids as the liquid electrolyte.
In a case in which the electrochemical treatment is carried out in a liquid electrolyte including nitric acid or hydrochloric acid, a direct current may be applied, or an alternating current may be applied, between the aluminum foil and a counter electrode. In a case where a direct current is applied to the aluminum foil, the current density is preferably 1 to 60 $A/dm^2$, and more preferably 5 to 50 $A/dm^2$. In a case in which the electrochemical treatment is carried out continuously, it is preferable that the electrochemical treatment is carried out by a liquid power feeding system that feeds electric power to the aluminum foil through a liquid electrolyte.
According to the invention, the amount of the aluminum hydroxide coating film formed by the coating film forming treatment is preferably 0.05 to 50 $g/m^2$, and more preferably 0.1 to 10 $g/m^2$.

[Through-hole forming step]

The through-hole forming step is a step of subjecting the aluminum foil to an electrolytic dissolution treatment after the coating film forming step and forming through-holes.

<Electrolytic dissolution treatment>

The electrolytic dissolution treatment is not particularly limited, and a direct current or an alternating current is used, while an acidic solution can be used as a liquid electrolyte. Above all, it is preferable that the electrochemical treatment is carried out using at least one acid between nitric acid and hydrochloric acid, and it is more preferable that the electrochemical treatment is carried out using a mixed acid obtained by adding at least one or more acids of sulfuric acid, phosphoric acid, and oxalic acid to these acids.
According to the invention, as the acidic solution that works as a liquid electrolyte, the liquid electrolytes described in US4671859A, US4661219A, US4618405A, US4600482A, US4566960A, US4566958A, US4566959A, US4416972A, US4374710A, US4336113A, and US4184932A can also be used, in addition to the acids described above.
The concentration of the acidic solution is preferably 0.1% to 2.5% by mass, and particularly preferably 0.2% to 2.0% by mass. The liquid temperature of the acidic solution is preferably 20°C to 80°C, and more preferably 30°C to 60°C.
An aqueous solution containing the above-described acid as a main ingredient can be used after being produced by adding, to an aqueous solution of acid at a concentration of 1 to 100 g/L, at least one of a nitric acid compound having a nitrate ion, such as aluminum nitrate, sodium nitrate, or ammonium nitrate; a hydrochloric acid compound having a hydrochloride ion, such as aluminum chloride, sodium chloride, or ammonium chloride; and a sulfuric acid compound having a sulfate ion, such as aluminum sulfate, sodium sulfate, or ammonium sulfate in an amount in the range of from 1 g/L to saturation.
Here, the phrase "containing as a main ingredient" means that the component that serves as a main ingredient in the aqueous solution is included in an amount of 30% by mass or more, and preferably 50% by mass or more, with respect to the total amount of the components added to the aqueous solution. In the following description, the same also applies to other components.
In the aqueous solution containing the above-described acid as a main ingredient, the metal that is included in an aluminum alloy, such as iron, copper, manganese, nickel, titanium, magnesium, or silica may be dissolved. Preferably, it is preferable to use a liquid obtained by adding aluminum chloride, aluminum nitrate, aluminum sulfate, or the like such that the content of an aluminum ion in an aqueous solution having an acid concentration of 0.1% to 2% by mass will be 1 to 100 g/L.
In the electrochemical dissolution treatment, a direct current is mainly used; however, in the case of using an alternating current, the alternating current power waveform is not particularly limited, and a sine wave, a rectangular

wave, a trapezoidal wave, a triangular wave, and the like are used. Above all, a rectangular wave or a trapezoidal wave is preferred, and a trapezoidal wave is particularly preferred.

(Nitric acid electrolysis)

According to the invention, through-holes having an average opening diameter of 0.1 μm or more and less than 100 μm can be easily formed by an electrochemical dissolution treatment using a liquid electrolyte containing nitric acid as a main ingredient (hereinafter, also simply referred to as "nitric acid dissolution treatment").

Here, it is preferable that the nitric acid dissolution treatment is an electrolysis treatment carried out using a direct current under the conditions of an average current density of 5 $A/dm^2$ or more and an amount of electricity of 50 $C/dm^2$ or more, for the reason that it is easy to control the dissolution point for through-hole formation. The average current density is preferably 100 $A/dm^2$ or less, and the amount of electricity is preferably 10,000 $C/dm^2$ or less.

The concentration or temperature of the liquid electrolyte for the nitric acid electrolysis is not particularly limited, and electrolysis can be carried out using a nitric acid liquid electrolyte having a high concentration, for example, a nitric acid concentration of 15% to 35% by mass, at 30°C to 60°C, or electrolysis can be carried out using a nitric acid liquid electrolyte having a nitric acid concentration of 0.7% to 2% by mass at a high temperature, for example, at or above 80°C.

Furthermore, electrolysis can be carried out using a liquid electrolyte prepared by mixing the nitric acid liquid electrolyte described above with at least one of sulfuric acid, oxalic acid, and phosphoric acid, all of the acids having a concentration of 0.1% to 50% by mass.

(Hydrochloric acid electrolysis)

According to the invention, through-holes having an average opening diameter of 1 μm or more and less than 100 μm can be easily formed by an electrochemical dissolution treatment (hereinafter, also simply referred to as "hydrochloric acid dissolution treatment") using a liquid electrolyte containing hydrochloric acid as a main ingredient.

Here, it is preferable that the hydrochloric acid dissolution treatment is an electrolysis treatment carried out using a direct current under the conditions of an average current density of 5 $A/dm^2$ or more and an amount of electricity of 50 $C/dm^2$ or more, for the reason that it is easy to control the dissolution point for through-hole formation. The average current density is preferably 100 $A/dm^2$ or less, and the amount of electricity is preferably 10,000 $C/dm^2$ or less.

The concentration or temperature of the liquid electrolyte for the hydrochloric acid electrolysis is not particularly limited, and electrolysis can be carried out using a hydrochloric acid liquid electrolyte having a high concentration, for example, a hydrochloric acid concentration of 10% to 35% by mass, at 30°C to 60°C, or electrolysis can be carried out using a hydrochloric acid liquid electrolyte having a hydrochloric acid concentration of 0.7% to 2% by mass at a high temperature, for example, at or above 80°C.

Furthermore, electrolysis can be carried out using a liquid electrolyte prepared by mixing the hydrochloric acid liquid electrolyte described above with at least one of sulfuric acid, oxalic acid, and phosphoric acid, all of the acids having a concentration of 0.1% to 50% by mass.

[Coating film removing step]

The coating film removing step is a step of removing the aluminum hydroxide coating film by performing a chemical dissolution treatment.

In the coating film removing step, for example, the aluminum hydroxide coating film can be removed by applying an acid etching treatment or an alkali etching treatment, which will be described below.

<Acid etching treatment>

The dissolution treatment is a treatment of dissolving the aluminum hydroxide coating film using a solution that dissolves aluminum hydroxide preferentially to aluminum (hereinafter, referred to as "aluminum hydroxide dissolving liquid").

Here, the aluminum hydroxide dissolving liquid is preferably an aqueous solution containing at least one selected from the group consisting of, for example, nitric acid, hydrochloric acid, sulfuric acid, phosphoric acid, oxalic acid, a chromium compound, a zirconium-based compound, a titanium-based compound, a lithium salt, a cerium salt, a magnesium salt, sodium silicofluoride, zinc fluoride, a manganese compound, a molybdenum compound, a magnesium compound, a barium compound, and simple halogens.

Specifically, examples of the chromium compound include chromium(III) oxide and anhydrous chromic(VI) acid.

Examples of the zirconium-based compound include ammonium zirconium fluoride, zirconium fluoride, and zirconium chloride.

Examples of the titanium compound include titanium oxide and titanium sulfide.
Examples of the lithium salt include lithium fluoride and lithium chloride.
Examples of the cerium salt include cerium fluoride and cerium chloride.
Examples of the magnesium salt include magnesium sulfide.
Examples of the manganese compound include sodium permanganate and calcium permanganate.
Examples of the molybdenum compound include sodium molybdate.
Examples of the magnesium compound include magnesium fluoride pentahydrate.
Examples of the barium compound include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, and hydrates thereof.
Among the barium compounds mentioned above, barium oxide, barium acetate, and barium carbonate are preferred, and barium oxide is particularly preferred.
Examples of the simple halogens include chlorine, fluorine, and bromine.
Among them, it is preferable that the aluminum hydroxide dissolving liquid is an aqueous solution containing an acid, and examples of the acid include nitric acid, hydrochloric acid, sulfuric acid, phosphoric acid, and oxalic acid, while the acid may be a mixture of two or more kinds of acids. Among them, it is preferable to use nitric acid as the acid.
The acid concentration is preferably 0.01 mol/L or higher, more preferably 0.05 mol/L or higher, and even more preferably 0.1 mol/L or higher. The upper limit is not particularly limited; however, generally, the upper limit is preferably 10 mol/L or lower, and more preferably 5 mol/L or lower.
The dissolution treatment is carried out by bringing the aluminum foil having an aluminum hydroxide coating film formed thereon, into contact with the dissolving liquid mentioned above. There are no particular limitations on the method of contacting, and for example, a dipping method and a spraying method may be used. Among them, a dipping method is preferred.
A dipping method is a treatment of dipping the aluminum foil having an aluminum hydroxide coating film formed thereon, in the dissolving liquid described above. It is preferable that stirring is performed at the time of dipping in order to achieve a treatment without unevenness.
The time for the dipping treatment is preferably 10 minutes or longer, more preferably 1 hour or longer, and even more preferably 3 hours or longer, or 5 hours or longer.

<Alkali etching treatment>

The alkali etching treatment is a treatment of dissolving the surface layer by bringing the aluminum hydroxide coating film into contact with an alkali solution.
Examples of the alkali used in the alkali solution include caustic alkali and alkali metal salts. Specific examples of the caustic alkali include sodium hydroxide (caustic soda) and caustic potash. Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as disodium phosphate, dipotassium phosphate, trisodium phosphate, and tripotassium phosphate. Among them, from the viewpoint of having a fast etching rate and being inexpensive, a solution of a caustic alkali and a solution containing both a caustic alkali and an alkali metal aluminate are preferred. Particularly, an aqueous solution of sodium hydroxide is preferred.
The concentration of the alkali solution is preferably 0.1% to 50% by mass, and more preferably 0.2% to 10% by mass. In a case in which aluminum ions are dissolved in an alkali solution, the concentration of aluminum ions is preferably 0.01% to 10% by mass, and more preferably 0.1% to 3% by mass. The temperature of the alkali solution is preferably 10°C to 90°C. The treatment time is preferably 1 to 120 seconds.
Examples of the method of bringing the aluminum hydroxide coating film into contact with an alkali solution include a method of passing the aluminum foil having an aluminum hydroxide coating film formed thereon through a tank containing an alkali solution; a method of dipping the aluminum foil having an aluminum hydroxide coating film formed thereon into a tank containing an alkali solution; and a method of spraying an alkali solution over the surface (aluminum hydroxide coating film) of the aluminum foil having an aluminum hydroxide coating film formed thereon.

[Colored layer forming step]

The colored layer forming step is a step of forming a colored layer on at least one side surface of a metal foil (aluminum foil) having through-holes.
As the method for forming a colored layer, a printing method using a plate such as offset printing, gravure printing, letterpress printing, and screen printing, and a digital printing method using an inkjet can be used, as described

above.

[Resin layer forming step]

The resin layer forming step is a step of forming a resin layer on the surface of the metal foil (aluminum foil) having through-holes in regard to production method A-1, and is a step of forming a resin layer on the aluminum foil that does not have through-holes in regard to production method A-2.

The method of forming a resin layer is not particularly limited; however, examples include dry lamination, wet lamination, extrusion lamination, and inflation lamination.

Among these, as described above, since an aspect in which the average thickness of the resin layer is 12 to 200 μm (particularly, 25 to 100 μm) and an aspect in which the average thickness of the aluminum foil is 5 to 1,000 μm are suitable aspects, a method of forming a resin layer by dry lamination is preferred.

Regarding the dry lamination, for example, the conditions and apparatuses described in paragraphs [0067] to [0078] of JP2013-121673A can be employed as appropriate.

Hereinafter, various steps of the production method B for the composite body, in a case of using metal other than the aluminum foil as the metal foil, will be explained using Fig. 27 to Fig. 31, and then the various steps will be described in detail.

Fig. 27 to Fig. 31 are schematic cross-sectional views illustrating examples of suitable embodiments of production method B for the composite body (hereinafter, also referred to as a "production method B-1").

As illustrated in Fig. 27 to Fig. 31, in the production method B-1 for the composite body, a first protective layer 8, in which a part of each of a plurality of metal particles 9 is embedded, is formed on one main surface of the metal foil 1, as illustrated in Fig. 27, by the first protective layer forming step using a composition containing a plurality of metal particles and a polymer component.

In the production method B-1, a second protective layer 11 is preferably formed on a surface of the metal foil 1 on a side opposite to the surface where the first protective layer 8 is formed, as illustrated in Fig. 28, by any second protective layer forming step using a composition containing a polymer component.

In the production method B-1, through-holes 5 are formed in the first protective layer 8 and the metal foil 1, as illustrated in Fig. 29, by a through-hole forming step B of bringing the metal foil 1 including the first protective layer 8 into contact with an etchant to dissolve the metal particles 9 and a part of the metal foil 1.

In the production method B-1, a metal foil 3 having a plurality of through-holes 5 is formed, as illustrated in Fig. 30, by a protective layer removing step of removing the first protective layer 8. In a case where the second protective layer forming step is included, as illustrated in Fig. 30, the metal foil 3 having the plurality of through-holes 5 is formed by removing the first protective layer 8 and the second protective layer 11 by the protective layer removing step.

In the production method B-1, a colored layer 7 is formed on at least one surface side of the metal foil 3 having the plurality of through-holes 5, as illustrated in Fig. 31, by a colored layer forming step of forming a colored layer on at least one surface side of the metal foil 3 having the plurality of through-holes 5.

In a preferable aspect, the production method B may include a resin layer forming step of forming the resin layer 6 on the surface of the metal foil 3 having the through-holes.

The colored layer forming step and the resin layer forming step in the production method B are the same as the colored layer forming step and the resin layer forming step in the production method A.

[First protective layer forming step]

The first protective layer forming step included in the production method B-1 is a step of forming the first protective layer in which a part of each of metal particles is embedded, is formed on one surface of the metal foil by using a composition containing a plurality of metal particles and a polymer component.

<Composition>

The composition used in the first protective layer forming step is a composition containing at least a plurality of metal particles and a polymer component.

(Metal particles)

Metal particles included in the composition are not particularly limited, as long as they are particles including metal atoms dissolving in an etchant used in the through-hole forming step B which will be described later, and are preferably particles configured of metal and/or a metal compound and are more preferably particles configured of metal.

Specific examples of the metal configuring the metal particles include aluminum, nickel, iron, copper, stainless

steel, titanium, tantalum, molybdenum, niobium, zirconium, tungsten, beryllium, and an alloy thereof, and these may be used alone or in combination of two or more kinds thereof.

Among these, aluminum, nickel, and copper are preferable, and aluminum and copper are more preferable.

Examples of the metal compound configuring the metal particles include oxide, composite oxide, hydroxide, carbonate, sulfate, silicate, phosphate, nitride, carbide, sulfide, and a compound of at least two or more kinds thereof. Specific examples thereof include copper oxide, aluminum oxide, aluminum nitride, and aluminum borate.

In the production method B-1, it is preferable to include metal atom in which the metal particle and the metal foil described above are the same, from a viewpoint of realizing recycling of dissolved metal by collecting the etchant used in the through-hole forming step which will be described later.

The shape of the metal particle is not particularly limited, and is preferably a spherical shape and more preferably a shape close to a true spherical shape.

An average particle diameter of the metal particles is preferably 1 μm to 10 μm and more preferably greater than 2 μm and equal to or smaller than 6 μm, from a viewpoint of dispersibility in the composition.

Here, the average particle diameter of the metal particles is accumulation 50% diameter of particle size distribution measured by using a laser diffraction • scattering type particle diameter measurement apparatus (Microtrac MT 3000 manufactured by Nikkiso Co., Ltd.).

A content of the metal particles is preferably 0.05% to 95% by mass, more preferably 1% to 50% by mass, and even more preferably 3% to 25% by mass with respect to a total solid content included in the composition.

(Polymer Component)

The polymer component included in the composition is not particularly limited, and a well-known polymer component of the related art can be used.

Specific examples of the polymer component include an epoxy resin, a silicone resin, an acrylic resin, a urethane resin, an ester resin, a urethane acrylate resin, a silicone acrylate resin, an epoxy acrylate resin, an ester acrylate resin, a polyamide resin, a polyimide resin, a polycarbonate resin, and a phenol resin, and these may be used alone or in combination of two or more kinds thereof.

Among these, even in a case where an acidic solution is used as the etchant used in the through-hole forming step B which will be described later, the polymer component is preferably a resin material selected from the group consisting of a phenolic resin, an acrylic resin, and a polyimide resin, from a viewpoint of easily obtaining desired through-holes.

In the invention, from a viewpoint of easily performing the removing in the protective layer removing step which will be described later, the polymer component included in the composition is preferably a water-insoluble and alkaline water-soluble polymer (hereinafter, also abbreviated as an "alkaline water-soluble polymer"), that is, a homopolymer containing an acidic group in a main chain or a side chain in the polymer, and a copolymer of these or a mixture thereof.

The alkaline water-soluble polymer having an acidic group in a main chain and/or a side chain of the polymer is preferable, from a viewpoint of more easily performing the removing in the protective layer removing step which will be described later.

Specific examples of the acidic group include a phenol group (-Ar-OH), sulfonamide group ($-SO_2NH-R$), a substituted sulfonamide acid group (hereinafter referred to as an "active imide group") [-SO2NHCOR, $-SO_2NHSO_2R$, $-CONHSO_2R$], a carboxyl group ($-CO_2H$), a sulfo group ($-SO_3H$), and a phosphone group ($-OPO_3H_2$).

Ar represents a divalent aryl linking group which may include a substituent, and R represents a hydrocarbon group which may include a substituent.

Among the alkaline water-soluble polymers including the acidic group, an alkaline water-soluble polymer including a phenol group, a carboxyl group, a sulfonamide group, and an active imide group is preferable, and particularly, an alkaline water-soluble polymer including a phenol group or a carboxyl group is most preferable, from a viewpoint of a balance between strength of the first protective layer to be formed and removing properties in the protective layer removing step which will be described later.

As the alkaline water-soluble polymer including the acidic group, the followings can be used, for example.

Examples of the alkaline water-soluble polymer including a phenol group include one kind or two or more kinds of phenols such as phenol, o-cresol, m-cresol, p-cresol, and xylenol, a novolac resin produced from aldehydes such as formaldehyde and paraformaldehyde, and a condensation polymer of pyrogallol and acetone. In addition, a copolymer obtained by copolymerizing a compound including a phenol group can also be used. Examples of the compound including a phenol group include acrylamide, methacrylamide, acrylic ester, methacrylic ester, and hydroxystyrene including a phenol group.

Specific examples thereof include N-(2-hydroxyphenyl) acrylamide, N-(3-hydroxyphenyl) acrylamide, N-(4-hydroxyphenyl) acrylamide, N-(2-hydroxyphenyl) methacrylamide, N-(3-hydroxyphenyl) methacrylamide, N-(4-hydroxyphenyl) methacrylamide, o-hydroxyphenyl acrylate, m-hydroxyphenyl acrylate, p-hydroxyphenyl acrylate, o-hydroxyphenyl methacrylate, m-hydroxyphenyl methacrylate, p-hydroxyphenyl methacrylate, o-hydroxystyrene, m-hydroxystyrene, p-hydroxystyrene, 2-(2-hydroxyphenyl) ethyl acrylate, 2-(3-hydroxyphenyl) ethyl acrylate, 2-(4-hydroxyphenyl) ethyl acrylate, 2-(2-hydroxyphenyl) ethyl methacrylate, 2-(3-hydroxyphenyl) ethyl methacrylate, and 2-(4-hydroxyphenyl) ethyl methacrylate.

Among these, a novolac resin or a copolymer of hydroxystyrene is preferable. Examples of commercially available product of the copolymer of hydroxystyrene include MARUKA LYNCUR MH-2, MARUKA LYNCUR MS-4, MARUKA LYNCUR MS-2, and MARUKA LYNCUR MS-1 manufactured by Maruzen Petrochemical Co., Ltd., and VP-8000 and VP-15000 manufactured by Nippon Soda Co., Ltd.

As the alkaline water-soluble polymer including a sulfonamide group, for example, a polymer configured of a minimum constitutional unit derived from the compound including a sulfonamide group as a main constituent component can be used. As such a compound, a compound including one or more of each of a sulfonamide group in which at least one hydrogen atom is bonded to a nitrogen atom, and a polymerizable unsaturated group can be used. Among these, a low-molecular-weight compound including an acryloyl group, an allyl group, or a vinyloxy group, and a substituted or mono-substituted aminosulfonyl group or a substituted sulfonylimino group in a molecule is preferable.

Particularly, m-aminosulfonylphenyl methacrylate, N-(p-aminosulfonylphenyl) methacrylamide, and/or N-(p-aminosulfonylphenyl) acrylamide can be suitably used.

As the alkaline water-soluble polymer including an active imide group, for example, a polymer configured of a minimum constitutional unit derived from the compound including an active imide group as a main constituent component can be used. As such a compound, a compound including one or more of each of an active imide group represented by the following structural formula, and a polymerizable unsaturated group can be used.

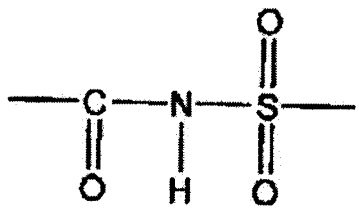

Specifically, N-(p-toluenesulfonyl) methacrylamide and N-(p-toluenesulfonyl) acrylamide can be suitably used.

As the alkaline water-soluble polymer including a carboxyl group, for example, a polymer configured of a minimum constitutional unit derived from the compound including one or more of each of a carboxyl group and a polymerizable unsaturated group in a molecule, as a main constituent component can be used. Specifically, an unsaturated carboxylic acid compound such as acrylic acid, methacrylic acid, maleic acid anhydride, and itaconic acid is used.

As the alkaline water-soluble polymer including a sulfo group, for example, a polymer configured of a minimum constitutional unit derived from the compound including one or more of each of a sulfo group and a polymerizable unsaturated group in a molecule, as a main constituent component can be used.

As the alkaline water-soluble polymer including a phosphone group, for example, a polymer configured of a minimum constitutional unit derived from the compound including one or more of each of a phosphone group and a polymerizable unsaturated group in a molecule, as a main constituent component can be used.

The minimum constitutional unit including an acidic group which configures the alkaline water-soluble polymer is not particularly necessarily only one kind, and the constitutional unit which is obtained by copolymerizing two or more kinds of the minimum constitutional units including the same acidic group or two or more kinds of the minimum constitutional units including different acidic groups can also be used.

As the method of the copolymerization, a graft copolymerization method, a block copolymerization, and/or a random copolymerization method which are well known in the related art can be used.

The copolymer in which 10 mol% or more of the compound including the acidic group to be copolymerized is included in the copolymer is preferable, and the copolymer in which 20 mol% or more thereof is included is more preferable.

In the invention, in a case of forming a copolymer by copolymerizing a compound, other compounds not including the acidic group can also be used as the compound. As an example of the other compounds not including the acidic group, compounds represented by (m1) to (m11) can be used.

(ml) Acrylic acid esters and methacrylic acid esters including an aliphatic hydroxyl group such as 2-hydroxyethyl acrylate or 2-hydroxyethyl methacrylate.

(m2) Alkyl acrylate such as methyl acrylate, ethyl acrylate, propyl acrylate, butyl acrylate, amyl acrylate, hexyl acrylate, octyl acrylate, benzyl acrylate, 2-chloroethyl acrylate, glycidyl acrylate, and N-dimethylaminoethyl acrylate.

(m3) Alkyl methacrylate such as methyl methacrylate, ethyl methacrylate, propyl methacrylate, butyl methacrylate, amyl methacrylate, hexyl methacrylate, cyclohexyl methacrylate, benzyl methacrylate, 2-chloroethyl methacrylate,

glycidyl methacrylate, and N-dimethylaminoethyl methacrylate.

(m4) Acrylamide or methacrylamide such as acrylamide, methacrylamide, N-methylol acrylamide, N-ethyl acrylamide, N-hexyl methacrylamide, N-cyclohexyl acrylamide, N-hydroxyethyl acrylamide, N-phenyl acrylamide, N-nitrophenyl acrylamide, and N-ethyl-N-phenyl acrylamide.

(m5) Vinyl ethers such as ethyl vinyl ether, 2-chloroethyl vinyl ether, hydroxyethyl vinyl ether, propyl vinyl ether, butyl vinyl ether, octyl vinyl ether, and phenyl vinyl ether.

(m6) Vinyl esters such as vinyl acetate, vinyl chloroacetate, vinyl butyrate, and vinyl benzoate.

(m7) Styrenes such as styrene, $\alpha$-methylstyrene, methylstyrene, and chloromethylstyrene.

(m8) Vinyl ketones such as methyl vinyl ketone, ethyl vinyl ketone, propyl vinyl ketone, and phenyl vinyl ketone.

(m9) Olefins such as ethylene, propylene, isobutylene, butadiene, and isoprene.

(m10) N-vinylpyrrolidone, N-vinylcarbazole, 4-vinylpyridine, acrylonitrile, and methacrylonitrile.

(m11) Unsaturated imide such as maleimide, N-acryloylacrylamide, N-acetylmethacrylamide, N-propionylmethacrylamide, and N- (p-chlorobenzoyl) methacrylamide.

The polymer component is not limited to the homopolymer or the copolymer, and is preferably a polymer component having a weight-average molecular weight of $1.0 \times 10^3$ to $2.0 \times 10^5$ and a number average molecular weight of $5.0 \times 10^2$ to $1.0 \times 10^5$. In addition, a polymer component having a polydispersity (weight-average molecular weight/number average molecular weight) of 1.1 to 10 is preferable.

In a case of using a copolymer as the polymer component, a blending weight ratio of the minimum constitutional unit derived from the compound including an acidic group configuring a main chain and/or a side chain thereof, and the other minimum constitutional unit not including an acidic group configuring a part of a main chain and/or a side chain, is preferably 50:50 to 5:95 and more preferably 40:60 to 10:90.

The polymer component may be used alone, respectively, two or more kinds thereof may be used in combination, and the used amount thereof is preferably 30% to 99% by mass, more preferably 40% to 95% by mass, and particularly preferably 50% to 90% by mass with respect to a total solid content included in the composition.

In the production method B-1, from a viewpoint of easily forming the through-holes in the through-hole forming step B which will be described later, a specific gravity of the metal particles regarding the metal particles and the polymer component is preferably greater than a specific gravity of the polymer component. Specifically, the specific gravity of the metal particles is equal to or greater than 1.5, and the specific gravity of the polymer component is more preferably equal to or greater than 0.9 and smaller than 1.5.

(Surfactant)

In the composition, a nonionic surfactant disclosed in JP1987-251740A (JP-S62-251740A) and/or JP1991-208514A (JP-H-03-208514A), or an amphoteric surfactant disclosed in JP1984-121044A (JP-S59-121044A) and/or JP1992-013149A (JP-H-04-013149A) can be added, from a viewpoint of coating properties.

Specific examples of the nonionic surfactant include sorbitan tristearate, sorbitan monopalmitate, sorbitan trioleate, stearic acid monoglyceride, and/or polyoxyethylene nonylphenyl ether.

Specific examples of the amphoteric surfactant include alkyldi(aminoethyl) glycine, alkylpolyaminoethyl glycine hydrochloride, 2-alkyl-N-carboxyethyl-N-hydroxyethylimidazolinium betaine, and/or N-tetradecyl-N,N-betaine type (for example, product name: AMOGEN K, manufactured by DKS Co. Ltd.).

A content thereof, in a case of including the surfactant, is preferably 0.01% to 10% by mass and more preferably 0.05% to 5% by mass with respect to a total solid content included in the composition.

(Solvent)

A solvent can be added to the composition, from a viewpoint of workability, in a case of forming the resin layer.

Specific examples of the solvent include ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethyl sulfoxide, sulfolane, $\gamma$-butyrolactone, toluene, and water, and these may be used alone or in combination of two or more kinds thereof.

<Forming Method>

A method for forming the first protective layer using the composition described above is not particularly limited, and a method for applying a composition on a metal foil to form a first protective layer is preferable.

The method for applying the composition on the metal foil is not particularly limited, and for example, methods

such as a bar coating method, a slit coating method, an ink jet method, a spray method, a roll coating method, a spin coating method, a casting coating method, a slit and spin method, and a transfer method can be used.

In the invention, it is preferable to form the first protective layer so as to satisfy Expression (1), from a viewpoint of easily forming the through-holes in the through-hole forming step B which will be described later.

$$n < r \ldots (1)$$

Here, in Expression (1), n represents a thickness of the first protective layer to be formed, r represents an average particle diameter of the metal particles included in the composition, and the unit of both n and r is μm.

In the production method B-1, from viewpoints of resistance to the etchant used in the through-hole forming step B which will be described later or workability in the protective layer removing step which will be described later, a thickness of the first protective layer formed by the first protective layer forming step is preferably 0.5 to 4 μm and more preferably 1 μm to 2 μm.

Here, an average thickness of the first protective layer is a value obtained by averaging thicknesses measured at 5 random point, in a case of cutting using a microtome and observing the cross section with an electron microscope.

[Second protective layer forming step]

In addition, in the production method B-1, from a viewpoint of workability in the through-hole forming step B which will be described later, a second protective layer forming step of forming a second protective layer using a composition containing a polymer component on a surface of a metal foil on a side opposite to a surface where a first protective layer is formed, is preferably included before the through-hole forming step B.

Here, as the polymer component, the same component as a polymer component included in the composition used in the first protective layer forming step described above is used. That is, the second protective layer formed in any second protective layer forming step is the same layer as the first protective layer described above, except that the metal particles described above are embedded, and in the method for forming the second protective layer, the second protective layer can be formed by the same method as the first protective layer, except that the metal particles described above are not used.

In a case of including the second protective layer forming step, the order is not particularly limited, as long as it is a step before the through-hole forming step B, and the step may be a step performed before, after, or at the same time as the first protective layer forming step described above.

[Through-hole forming step B]

The through-hole forming step B included in the production method B-1 is a step of bringing the metal foil including the first protective layer into contact with an etchant to dissolve the metal particles and a part of metal foil, and forming through-holes in the metal foil, after the first protective layer forming step described above, and is a step of forming the through-holes in the metal foil by a so-called chemical etching treatment.

<Etchant>

As the etchant, a chemical solution of acid or alkali can be suitably used, as long as it is an etchant suitable for metal species of the metal particle and the metal foil.

Examples of acid include hydrochloric acid, sulfuric acid, nitric acid, hydrofluoric acid, hydrogen peroxide, and acetic acid.

Examples of alkali include caustic soda and caustic.

Examples of alkali metal salt include alkali metal silicate such as sodium silicate, sodium silicate, potassium metasilicate, and potassium silicate; alkali metal carbonate such as sodium carbonate and potassium carbonate; alkali metal aluminate such as sodium aluminate and potassium aluminate; alkali metal aldonate such as sodium gluconate and potassium gluconate; and alkali metal hydrogen phosphate such as dibasic sodium phosphate, dibasic potassium phosphate, tribasic sodium phosphate, and tribasic potassium phosphate.

In addition, inorganic salt such as iron (III) chloride and copper (II) chloride can also be used.

These may be used alone or as a mixture of two or more kinds thereof.

<Treatment Method>

A treatment of forming the through-holes is performed by bringing the metal foil including the first protective layer into contact with the etchant described above.
The method for the contact is not particularly limited and examples thereof include an immersion method and a spray method. Among these, the immersion method is preferable.
The time of the immersion treatment is preferably 15 seconds to 10 minutes and more preferably 1 minute to 6 minutes.
A liquid temperature of the etchant during the immersion is preferably 25°C to 70°C and more preferably 30°C to 60°C.

[Protective layer removing step]

The protective layer removing step included in the production method B-1 is a step of removing the first protective layer (and the second protective layer, hereinafter, collectively referred to as the protective layer) and producing the metal foil having through-holes, after the through-hole forming step B described above.
The method of removing the protective layer is not particularly limited, and is preferably a method of dissolving and removing the protective layer using an alkali aqueous solution, in a case of using the alkaline water-soluble polymer as the polymer component.

<Alkali aqueous solution>

Specific examples of the alkali aqueous solution include inorganic alkalis such as sodium hydroxide, potassium hydroxide, sodium carbonate, sodium silicate, sodium metasilicate, and aqueous ammonia; primary amines such as ethylamine and n-propylamine; secondary amines such as diethylamine and di-n-butylamine; tertiary amines such as triethylamine and methyldiethylamine; alcoholamines such as dimethylethanolamine and triethanolamine; Quaternary ammonium salt such as tetramethylammonium hydroxide and tetraethylammonium hydroxide; and cyclic amines such as pyrrole and pihelidine, and these may be used alone or in combination of two or more kinds thereof.
A suitable amount of alcohols or a surfactant can be added to the alkali aqueous solution and used.

<Treatment method>

A treatment of removing the protective layer is, for example, performed by bringing the metal foil including the protective layer into contact with the alkali aqueous solution after the through-hole forming step B.
The method for the contact is not particularly limited and examples thereof include an immersion method and a spray method. Among these, the immersion method is preferable.
The time of the immersion treatment is preferably 5 seconds to 5 minutes and more preferably 10 seconds to 2 minutes.
A temperature of the alkali aqueous solution during the immersion is preferably 25°C to 60°C and more preferably 30°C to 50°C.

[Anticorrosion treatment]

The production method B-1 preferably includes a step of performing an anticorrosion treatment.
The timing for performing the anticorrosion treatment is not particularly limited, for example, may be a treatment performed on the metal foil using the first protective layer forming step, may be a treatment of adding triazoles which will be described later to the alkali aqueous solution in the protective layer removing step, or may be a treatment performed after the protective layer removing step.
As the anticorrosion treatment, for example, a treatment of immersing the metal foil in a solution having pH of 5 to 8.5 obtained by dissolving at least triazoles in a solvent, and forming an organic dielectric coating film.
As the triazoles, for example, benzotriazole (BTA) and tolyltriazole (TTA) are suitably used.
In addition, various organic rust inhibitors, tiazoles, imidazoles, mercaptans and/or tolethanolamine can be used together with triazoles.
As the solvent used in the anticorrosion treatment, water or an organic solvent (particularly, alcohols) can be suitably used, and water containing deionized water as a main body is preferable, in consideration of evenness of an organic dielectric coating film to be formed, easily and simply controlling a thickness during the mass production, and effect to environments.
A dissolving concentration of triazoles is suitably determined in accordance with a relationship between a

thickness of the organic dielectric coating film to be formed and treatment available time, and may be normally 0.005% to 1% by weight.

A temperature of the solution may be room temperature and may be heated and used, if necessary.

The immersion time of the metal foil in the solution is suitably determined in accordance with a relationship between the dissolving concentration of triazoles or the thickness of the organic dielectric coating film to be formed, and may be normally approximately 0.5 to 30 seconds.

As the other specific example of the anticorrosion treatment, a method for forming an inorganic dielectric coating film including hydrous oxide of chrome as a main body, by immersing the metal foil in an aqueous solution obtained by dissolving at least one kind selected from the group of chromium trioxide, chromate, and dichromate in water is used.

Here, as the chromate, for example, potassium chromate and sodium chromate is suitable, and as the dichromate, for example, potassium dichromate and sodium dichromate are suitable. A dissolving concentration thereof is normally set as 0.1% to 10% by mass and a liquid temperature may be approximately room temperature to 60°C. A pH value of the aqueous solution is not particularly limited from an acid region to an alkali region, and is normally set as 1 to 12.

In addition, an immersion time of the metal foil is suitably selected according to a thickness of the inorganic dielectric coating film to be formed.

In the invention, the washing is preferably performed after finishing the step of various treatments described above. In the washing, pure water, well water, and/or tap water can be used. A nipping device may be used in order to prevent the treatment liquid from being transferred to the next step.

Here, the production method B of the composite body is not limited to the method described above.

In the production method B-1, by performing the through-hole forming step B, after the first protective layer forming step, the metal particles and a part of metal foil are brought into contact with the etchant to be dissolved, and through-holes are formed in the metal foil, however, instead of this, the through-hole forming step B may be performed (hereinafter, referred to as the production method B-2) after the particle removing step of removing particles before the through-hole forming step, after the first layer forming step. In this case, the particles included in the first protective layer is not limited to the metal particles, an inorganic filler or an inorganic-organic composite filler can be used.

As described above, the first protective layer in which a recess is formed on a portion where the particles are embedded, is obtained through the first protective layer forming step and the particle removing step, and then, through-holes are formed from the recess of the first protective layer, in the through-hole forming step B. Regarding the reason that the through-holes are formed from the recess of the first protective layer, the extremely thin first protective layer remains in the deepest portion of the recess or the portion where the metal foil is exposed exists, and accordingly, the etchant is first infiltrated to the recess rather than the other portions, and the through-holes are formed in the metal foil.

Examples of the inorganic filler include metal and a metal compound, and examples of the metal compound include oxide, composite oxide, hydroxide, carbonate, sulfate, silicate, phosphate, nitride, carbide, sulfide, and a compound of at least two or more kinds thereof.

Specific examples thereof include glass, zinc oxide, silica, alumina, zircon oxide, tin oxide, potassium titanate, strontium titanate, aluminum borate, magnesium oxide, magnesium borate, aluminum hydroxide, magnesium hydroxide, calcium hydroxide, titanium hydroxide, basic magnesium sulfate, calcium carbonate, magnesium carbonate, calcium sulfate, magnesium sulfate, calcium silicate, magnesium silicate, calcium phosphate, silicon nitride, titanium nitride, aluminum nitride, silicon carbide, titanium carbide, zinc sulfide, and a compound of at least two or more kinds thereof.

Among these, glass, silica, alumina, potassium titanate, strontium titanate, aluminum borate, magnesium oxide, calcium carbonate, magnesium carbonate, calcium silicate, magnesium silicate, calcium phosphate, and calcium sulfate are preferable.

As an organic-organic composite filler, for example, a compound obtained by coating the surface of particles such as a synthesis resin particles or natural polymer particles with the inorganic filler described above is used.

Specific examples of the synthesis resin particles include resin particles of an acrylic resin, polyethylene, polypropylene, polyethylene oxide, polypropylene oxide, polyethyleneimine, polystyrene, polyurethane, polyurea, polyester, Polyamide, polyimide, carboxymethylcellulose, gelatin, starch, chitin, and chitosan.

Among these, resin particles of an acrylic resin, polyethylene, polypropylene, and polystyrene are preferable.

In the particle removing step, the method for removing particles is not particularly limited, and for example, as illustrated in Fig. 27, in a case of the first protective layer in a state where a part of each particle is embedded, the particles can be removed by applying an external force to the portion of the particle which is not embedded in the first protective layer using a sponge or a brush.

In the invention, from a viewpoint of rapidly performing the removing without changing the shape of the first protective layer, the method for removing the particles is preferably a method for removing the particles by rubbing the surface of the first protective layer in which at least a part of each particle is embedded, in a state of being immersed in the solvent.

Here, the "surface of the first protective layer in which at least a part of each particle is embedded" is the surfaces of each particle and the first protective layer, in a case where a part of each particle is embedded in the first

protective layer, as illustrated in Fig. 27, and is the surface of the first protective layer, in a case where the entire portion of each particle is embedded in the first protective layer.

The solvent is not particularly limited, as long as it is a solvent for dissolving the first protective layer, and for example, the same solvent as the solvent described as a random component of the composition used in the first protective layer forming step described above can be used.

In addition, the method for rubbing the surface of the first protective layer is not particularly limited, and for example, a method of rubbing with a sponge or a brush (for example, a wire brush or a nylon brush roll) is used.

In addition, in the method for producing the composite body, the method for forming the through-holes in the metal foil is a method for bringing the metal foil into contact with the etchant, and locally dissolving from an intermetallic compound (precipitate or crystallized product) in the metal foil to form the through-holes. In a case of this method, an existence state of the intermetallic compound is different for each material of the metal foil, and accordingly, the conditions are set in advance for each material, and the conditions of the etchant and conditions of etching time and the like may be adjusted. In this case, the protective layer may be unnecessary.

[Roll-to-roll treatment]

In the invention, the treatment of each step may be performed by a so-called single wafer processing, using a cut sheet-shaped metal foil, or the treatment performed with a so-called roll to roll (hereinafter, also referred to as "RtoR") of performing each step while transporting the elongated metal foil with a predetermined transportation path in a longitudinal direction.

The RtoR of the invention is a production method of continuously performing each step described above in order with each treatment device disposed on the transportation path while sending and transporting the metal foil from a roll around which the elongated metal foil is wound, in a longitudinal direction, and winding the treated composite body in a roll shape again.

Examples

The invention will be described in more detail below based on Examples. The materials, use amounts, proportions, treatment contents, treatment procedures, and the like disclosed in the following Examples can be modified as appropriate as long as the purport of the invention is maintained. Therefore, the scope of the invention should not be construed to be limited by the following Examples.

[Example 1]

<Formation of resin layer>

An aluminum foil (JIS H-4160, alloy number: 1N30, aluminum purity: 99.30%) having an average thickness of 10 μm and a size of 200 mm × 300 mm was used as the metal foil. A resin layer was laminated on a surface of the aluminum foil by a method disclosed in JP2013-121673A, using PET having a thickness of 100 μm. A thickness of the resin layer after the laminating was 100 μm.

<Formation of through-holes>

The treatment shown hereinafter was performed on the aluminum foil laminated with the resin layer, and through-holes were formed.

(a 1) Aluminum hydroxide coating film forming treatment (coating film forming step)

The aluminum foil described above was subjected to an electrolysis treatment by using the aluminum foil as a negative electrode, using a liquid electrolyte (nitric acid concentration 1%, sulfuric acid concentration 0.2%, and aluminum concentration 0.5%) that had been kept warm at 50°C, and thus an aluminum hydroxide coating film was formed on the surface of the aluminum foil on a side where the PET is not provided. The electrolysis treatment was achieved using a direct current power supply. The direct current density was set to 55 $A/dm^2$, and a direct current was applied for 30 seconds.

After the formation of the aluminum hydroxide coating film, spray washing with water was carried out.

The thickness of the aluminum hydroxide coating film was measured by making an observation by SEM of a cross section cut by focused ion beam (FIB) cutting processing, and the thickness was 1.5 μm.

(b1) Electrolytic dissolution treatment (through-hole forming step A)

Next, the aluminum foil was subjected to an electrolysis treatment by using the aluminum foil as a positive electrode, using a liquid electrolyte (nitric acid concentration 1%, sulfuric acid concentration 0.2%, and aluminum concentration 0.5%) that had been kept warm at 50°C, by setting the current density to 35 $A/dm^2$ under the conditions of a sum of the amounts of electricity of 380 $C/dm^2$. Thus, through-holes were formed in the aluminum foil and the aluminum hydroxide coating film. The electrolysis treatment was carried out using a direct current power supply.
After the formation of through-holes, spray washing with water was carried out, and the aluminum foil was dried.

(c1) Aluminum hydroxide coating film removing treatment (coating film removing step)

Next, the aluminum foil obtained after the electrolytic dissolution treatment was immersed in an aqueous solution having a sodium hydroxide concentration of 35% by mass and an aluminum ion concentration of 0.5% by mass (liquid temperature 35°C) for 20 seconds, and then the aluminum foil was immersed in an aqueous solution having a sulfuric acid concentration of 30% and an aluminum ion concentration of 0.5% by mass (liquid temperature 50°C) for 20 seconds. Thus, the aluminum hydroxide coating film was dissolved and removed.
Subsequently, spray washing with water was carried out, and the aluminum foil was dried. Thus, a composite body in which PET is provided on an aluminum foil having through-holes was produced.

<Formation of colored layer>

A colored layer was produced on the surface of the aluminum foil having the through-holes produced as described above using an inkjet printer (Acuity Select 26 manufactured by Fujifilm Holdings Corporation).
As ink, Uvijet KV ink (manufactured by Fujifilm Holdings Corporation) was used.
In this case, the tint was adjusted as pink and a transmittance of the colored layer was set as 70%.

[Example 2]

A composite body was produced by a method similar to that of Example 1, except that the amount of droplets of the inkjet was adjusted so that the transmittance of the colored layer became 45%.

[Example 3]

A composite body was produced by a method similar to that of Example 1, except that the transmittance of the colored layer became 20%.

[Example 4]

A composite body was produced by a method similar to that of Example 1, except that the blending of the ink was changed to set the tint of the colored layer became blue.

[Example 5]

A composite body was produced by a method similar to that of Example 1, except that the tint of the colored layer became green.

[Example 6]

A composite body was produced by a method similar to that of Example 1, except that the (c1) aluminum hydroxide coating film removing treatment (coating film removing step) was changed to the following (c2) aluminum hydroxide coating film removing treatment (coating film removing step).

(c2) Aluminum hydroxide coating film removing treatment (coating film removing step)

The aluminum foil obtained after the electrolytic dissolution treatment was immersed in an aqueous solution having a sodium hydroxide concentration of 35% by mass and an aluminum ion concentration of 0.5% by mass (liquid temperature 35°C) for 30 seconds, and then the aluminum foil was immersed in an aqueous solution having a sulfuric acid concentration of 30% and an aluminum ion concentration of 0.5% by mass (liquid temperature 50°C) for 20 seconds.

Thus, the aluminum hydroxide coating film was dissolved and removed.

Subsequently, spray washing with water was carried out, and the aluminum foil was dried.

[Example 7]

A composite body was produced by a method similar to that of Example 1, except that the (c1) aluminum hydroxide coating film removing treatment (coating film removing step) was changed to the following (c3) aluminum hydroxide coating film removing treatment (coating film removing step).

(c3) Aluminum hydroxide coating film removing treatment (Coating film removing step)

The aluminum foil obtained after the electrolytic dissolution treatment was immersed in an aqueous solution having a sodium hydroxide concentration of 35% by mass and an aluminum ion concentration of 0.5% by mass (liquid temperature 35°C) for 40 seconds, and then the aluminum foil was immersed in an aqueous solution having a sulfuric acid concentration of 30% and an aluminum ion concentration of 0.5% by mass (liquid temperature 50°C) for 20 seconds. Thus, the aluminum hydroxide coating film was dissolved and removed.

Subsequently, spray washing with water was carried out, and the aluminum foil was dried.

[Example 8]

As the metal foil, a copper foil (JIS C 1100-H, an electrolytic copper foil) having an average thickness of 10 μm and a size of 200 mm × 200 mm was used.

<Formation of through-holes>

(d1) First protective layer forming step

A first protective layer forming composition 1 produced with the following composition was applied and dried on one surface on a copper foil, and a first protective layer having a thickness of approximately 1 μm was formed.

A composition produced with the same ratio as the first protective layer forming composition 1, except that the copper particles are excluded, was applied and dried on the other surface of the copper foil, and a second protective layer having a thickness of approximately 1 μm was formed.

| First protective layer forming composition 1 |
|---|
| • m, p-cresol novolak (m/p ratio = 6/4, weight-average molecular weight 4100): 1.2 g |
| • HXR-Cu (copper particles, average particle diameter: 5.0 μm, manufactured by NIPPON ATOMIZED METAL POWDERS, Inc.): 0.4 g |
| • MEGAFACE F-780-F (surfactant, manufactured by DIC): 0.1 g |
| • Methyl ethyl ketone: 1.0 g |
| • 1-methoxy-2-propanol: 5.0 g |

(e1) Through-hole forming step B

An etchant kept warm at 40°C [iron (III) chloride concentration: 30% by mass, hydrochloric acid concentration: 3.65% by mass] was ejected to the copper foil including the first protective layer and the second protective layer by spray for 120 seconds, spray washing with water was carried out and dried. Thus, through-holes were formed.

(fl) Protective layer removing step

The copper foil after the through-hole formation was immersed in an alkali aqueous solution at a liquid temperature of 50°C (sodium hydroxide concentration: 0.4% by mass) for 120 seconds. Thus, the first protective layer and the second protective layer were dissolved and removed.

Subsequently, spray washing with water was carried out, and the copper foil was dried. Thus, a copper foil having through-holes was produced.

<Formation of colored layer>

A colored layer was produced on the surface of the copper foil having the through-holes produced as described above using an inkjet printer (Acuity Select 26 manufactured by Fujifilm Holdings Corporation).
As ink, Uvijet KV ink (manufactured by Fujifilm Holdings Corporation) was used.

[Comparative Example 1]

A composite body was produced by a method similar to that of Example 1, except that the colored layer was not provided.

[Comparative Example 2]

A composite body was produced by a method similar to that of Example 2, except that the colored layer was not provided.

[Evaluation]

<Tint and metallic luster>

The tint and metallic luster were evaluated from the external appearance of the produced composite body.

<Light transmittance>

Transmittance of light in a wavelength range of 200 nm to 900 nm was measured.
The transmittance of light was measured based on JIS K 7361 using NDH 4000 manufactured by Nippon Denshoku Industries Co., Ltd.
The results are shown in Table 2.

[Table 2]

| | Metal foil | | | Colored layer | | Evaluation | | |
|---|---|---|---|---|---|---|---|---|
| | Kind | Through-holes | | Tint | Transmittance % | Tint | Metallic luster | Transmittance % |
| | | Average opening ratio % | Average opening diameter μm | | | | | |
| Example 1 | Aluminum foil | 30 | 20 | Pink | 70 | Pink | Observed | 20 |
| Example 2 | Aluminum foil | 30 | 20 | Pink | 45 | Pink | Observed | 15 |
| Example 3 | Aluminum foil | 30 | 20 | Pink | 20 | Pink | Observed | 6 |
| Example 4 | Aluminum foil | 30 | 20 | Blue | 70 | Blue | Observed | 20 |
| Example 5 | Aluminum foil | 30 | 20 | Green | 70 | Green | Observed | 20 |
| Example 6 | Aluminum foil | 50 | 20 | Pink | 70 | Pink | Observed | 35 |
| Example 7 | Aluminum foil | 70 | 20 | Pink | 70 | Pink | Observed | 50 |
| Example 8 | Copper foil | 5 | 20 | Pink | 70 | Pink | Observed | 3 |
| Comparative Example 1 | Aluminum foil | 30 | 20 | - | - | Silver | Observed | 30 |
| Comparative Example 2 | Copper foil | 5 | 20 | - | - | Copper | Observed | 5 |

As shown in Table 2, in the examples of the invention, the tint which is different from that of the metal foil can be applied, while maintaining the metallic luster, and the transmittance of light can be increased.
From the results described above, the effect of the invention is clear.

Explanation of References

1: metal foil (aluminum foil)

2: aluminum hydroxide coating film

3: metal foil having through-holes (aluminum foil having through-holes)

4: aluminum hydroxide coating film having through-holes

5: through-hole

6: resin layer

7, 7b: colored layer

8: first protective layer

9: metal particle

10a to 10g: composite body

11: second protective layer

A, B: reference line

3a, 3b: starting point

a, b: perpendicular line

**Claims**

**1.** A composite body comprising:

a metal foil having a plurality of through-holes in a thickness direction; and
a colored layer provided on at least one surface side of the metal foil,
wherein an average opening diameter of the through-holes is 0.1 to 100 $\mu$m,
an average opening ratio provided by the through-holes is 0.1% to 90%, and
a light transmittance of the colored layer is 5% or higher.

**2.** The composite body according to claim 1, further comprising:

a resin layer provided on at least one surface of the metal foil,
wherein the colored layer is provided on a surface of at least one of the metal foil or the resin layer.

**3.** The composite body according to claim 1 or 2,
wherein the colored layer includes at least one of a dye or a pigment.

**4.** The composite body according to any one of claims 1 to 3,
wherein the composite body has a light transmittance of 0.1% to 90%.

**5.** The composite body according to any one of claims 1 to 4, wherein a thickness of the metal foil is 5 μm to 1000 μm.

**6.** The composite body according to any one of claims 1 to 5, wherein the metal foil is a foil selected from the group consisting of an aluminum foil, a copper foil, a silver foil, a gold foil, a platinum foil, a stainless steel foil, a titanium foil, a tantalum foil, a molybdenum foil, a niobium foil, a zirconium foil, and a tungsten foil, a beryllium copper foil, a phosphor bronze foil, a brass foil, a white foil, a tin foil, a lead foil, a zinc foil, a solder foil, an iron foil, a nickel foil, a permalloy foil, a nichrome foil, a 42 alloy foil, a Kovar foil, a Monel foil, an Inconel foil, and a Hastelloy foil, or a foil in which the foil selected from this group and a metal of a different kind from the selected foil are laminated on each other.

**7.** The composite body according to any one of claims 1 to 6, wherein the composite body is used in a decorative film.

FIG. 1

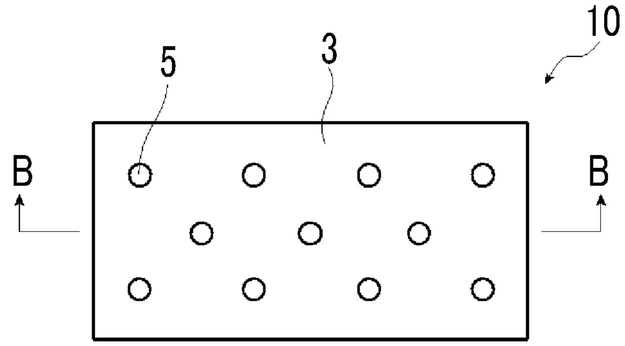


FIG. 2

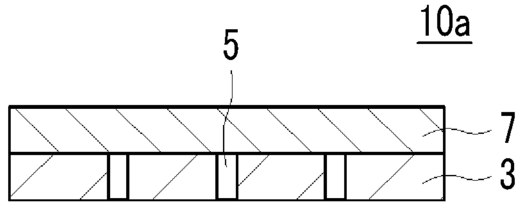


FIG. 3

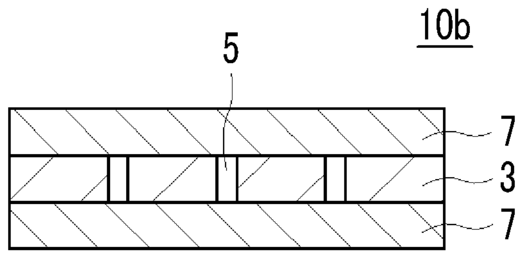


FIG. 4

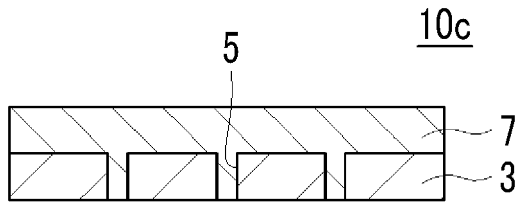


FIG. 5

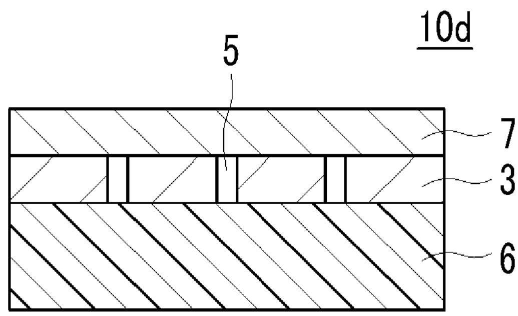

FIG. 6

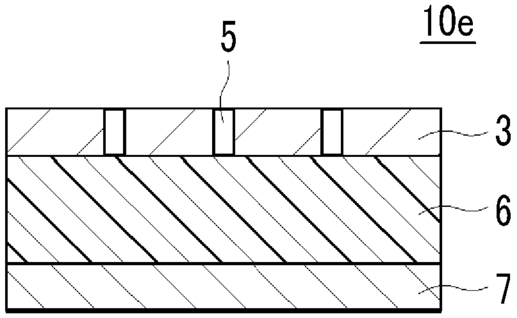


FIG. 7

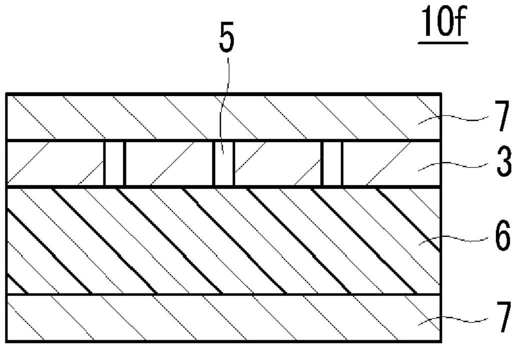


FIG. 8

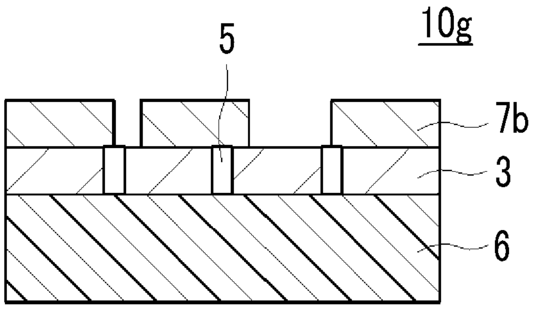


FIG. 9

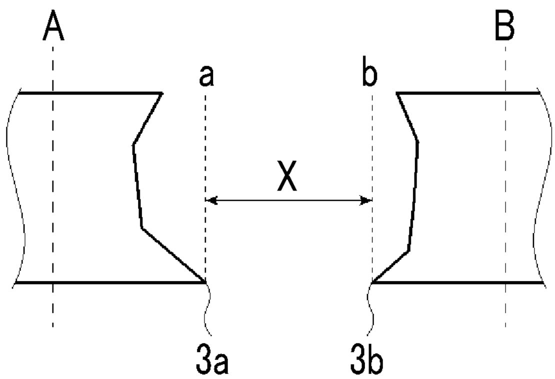

FIG. 10

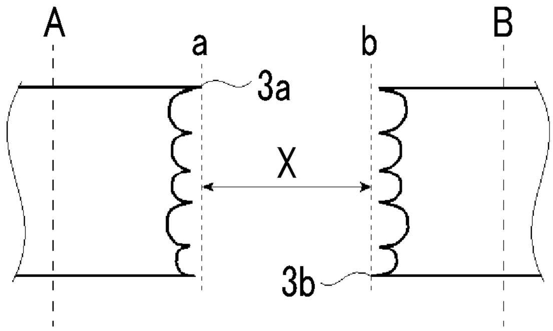


FIG. 11

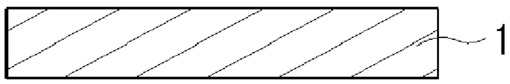


FIG. 12

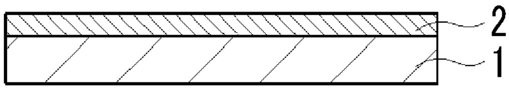


FIG. 13

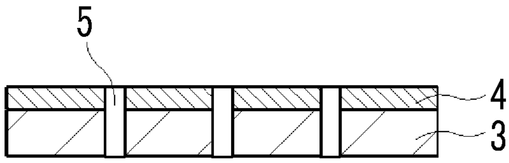


FIG. 14

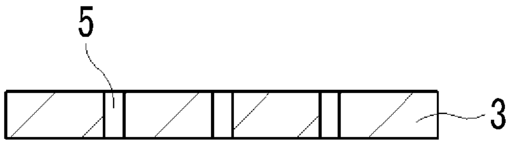


FIG. 15

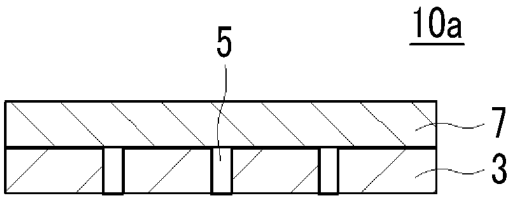


FIG. 16

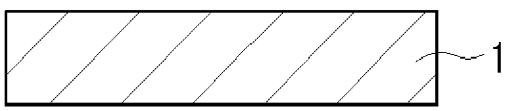


FIG. 17

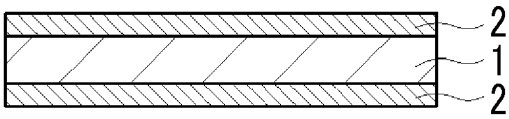

FIG. 18

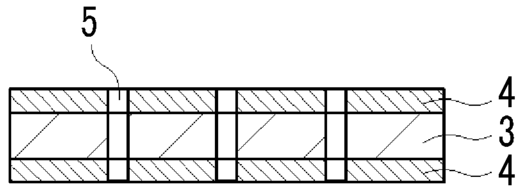


FIG. 19

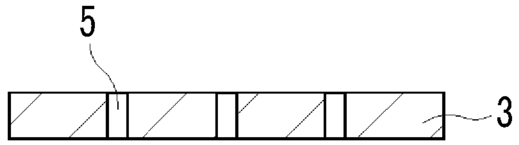


FIG. 20

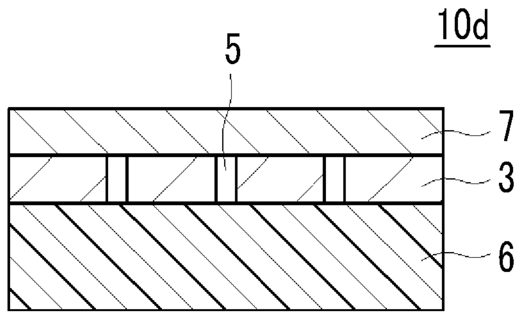


FIG. 21

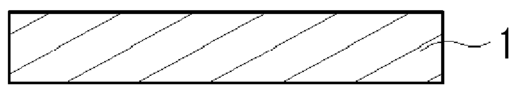


FIG. 22

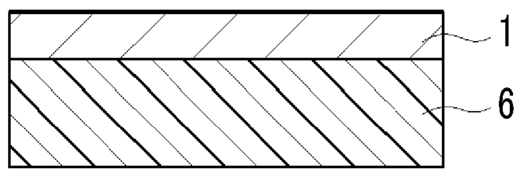


FIG. 23

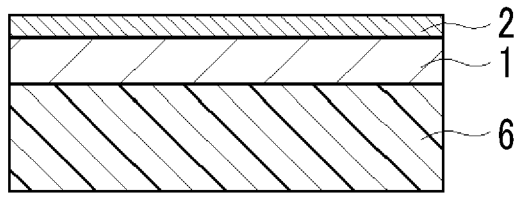

FIG. 24

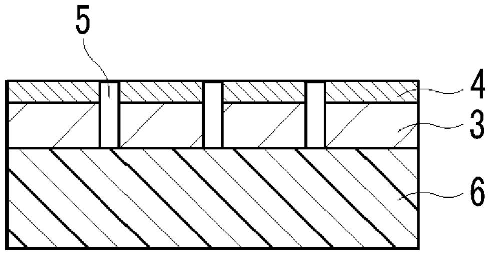


FIG. 25

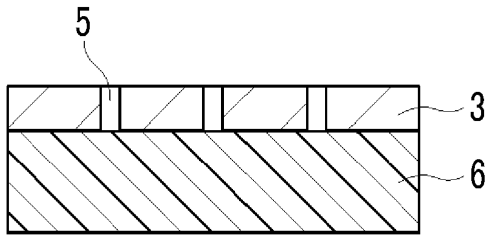


FIG. 26

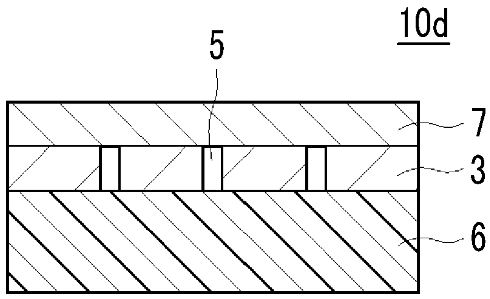


FIG. 27

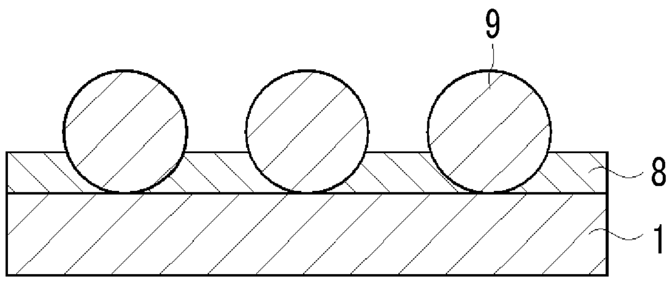


FIG. 28

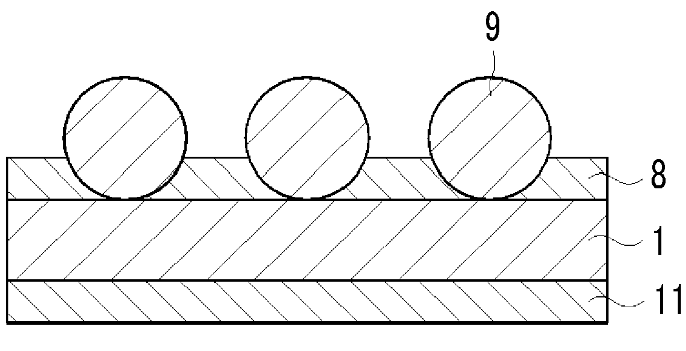

FIG. 29

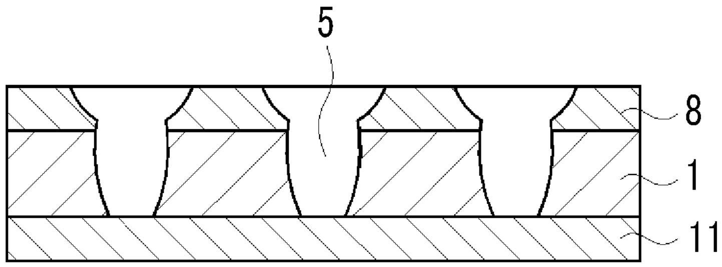


FIG. 30

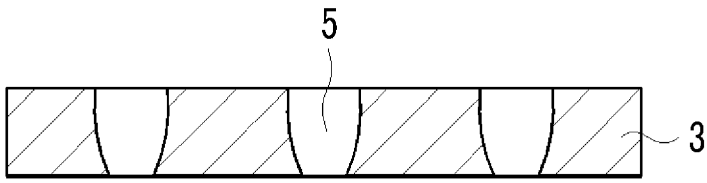


FIG. 31

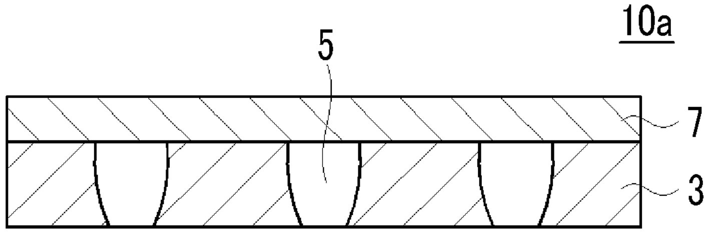

**INTERNATIONAL SEARCH REPORT**

International application No.
PCT/JP2018/019486

A. CLASSIFICATION OF SUBJECT MATTER
Int.Cl. B32B15/08(2006.01)i, B32B27/00(2006.01)i

According to International Patent Classification (IPC) or to both national classification and IPC

B. FIELDS SEARCHED

Minimum documentation searched (classification system followed by classification symbols)
Int.Cl. B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2017/018462 A1 (FUJIFILM CORP.) 02 February 2017, paragraphs [0001], [0016]-[0039], [0046]-[0063], [0081]-[0086], claims (Family: none) | 1, 4-6<br>2-3, 7 |
| X<br>A | JP 2009-218206 A (MITSUI MINING & SMELTING CO., LTD.) 24 September 2009, claims, paragraphs [0001], [0016]-[0034], [0039]-[0043] (Family: none) | 1-2, 4-6<br>3, 7 |
| X<br>A | JP 2005-234096 A (FUJI PHOTO FILM CO., LTD.) 02 September 2005, claims, paragraphs [0001], [0029]-[0030], [0035]-[0040], [0045]-[0047], drawings (Family: none) | 1-6<br>7 |
| P, X | WO 2018/061709 A1 (FUJIFILM CORP.) 05 April 2018, entire text (Family: none) | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 July 2018 (10.07.2018) | 24 July 2018 (24.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005015867 A
- JP 2015196280 A
- JP 2005007765 A
- JP 2009256572 A
- JP 2011201123 A
- US 4671859 A
- US 4661219 A
- US 4618405 A
- US 4600482 A
- US 4566960 A
- US 4566958 A
- US 4566959 A
- US 4416972 A
- US 4374710 A
- US 4336113 A
- US 4184932 A
- JP 2013121673 A
- JP 62251740 A
- JP S62251740 A
- JP 3208514 A
- JP H03208514 A
- JP 59121044 A
- JP S59121044 A
- JP 4013149 A
- JP H04013149 A